# EUROPEAN PATENT SPECIFICATION

(11) **EP 1 856 886 B1**
(45) Date of publication and mention of the grant of the patent: **13.07.2016**
(21) Application number: 06737844.8
(22) Date of filing: 08.03.2006
(51) Int. Cl.: H04L 29/06

(54) **METHOD AND APPARATUS FOR PROVIDING REMOTE AUDIO**
VORRICHTUNG UND VERFAHREN ZUR BEREITSTELLUNG VON AUDIO MIT FERNSTEUERUNG
PROCEDE ET APPAREIL DE TRANSMISSION AUDIO A DISTANCE

(30) Priority: 11.03.2005 US 77644
(43) Date of publication of application: 21.11.2007
(73) Proprietor: Intel Corporation, Santa Clara, CA 95054 (US)
(72) Inventor: ZIMMER, Vincent, Federal Way, Washington 98003 (US); ROTHMAN, Michael, Puyallup, Washington 98374 (US)
(74) Representative: Maiwald Patentanwalts GmbH
(86) International application number: PCT/US2006/008708
(87) International publication number: WO 2006/099199

(56) References cited:
- EP-A- 1 478 172
- WO-A-01/50740
- VARIOUS: "DOCSIS Set-top Gateway (DSG) Interface Specification" DOCSIS SP-DSG-I01-020228, 28 February 2002 (2002-02-28), XP002389408 OpenCable specification
- BERGER L ET AL: "Generalized Multi-Protocol Label Switching (GMPLS) Signaling; rfc3473.txt;" IETF STANDARD, INTERNET ENGINEERING TASK FORCE, IETF, CH, January 2003 (2003-01), XP015009256 ISSN: 0000-0003
- INTEL: "High Definition Audio Specification" INTEL, 15 April 2004 (2004-04-15), XP002389409 Intel

## Description

### FIELD OF THE INVENTION

The field of invention relates generally to computer systems and networking and, more specifically but not exclusively relates to techniques for providing audio content to clients using an out-of-band communication mechanism.

### BACKGROUND INFORMATION

Over the history of the personal computer (PC), audio capabilities have been ever evolving. The original IBM PCs introduced in 1981 could only provide a few warning beep tones. The introduction of the PC-AT ISA (industry standard architecture) bus gave way to the development of audio add-on peripheral cards, such as the Sound Blaster™ audio cards manufactured by Creative Labs. As processing capabilities and bus speeds and technologies (*e.g.,* PCI) improved, so did the audio quality and capabilities of the add-on audio cards.

With the introduction of the PCI (peripheral component interconnect) standard, motherboards with integrated audio chips began to emerge, but failed to take off. However, with processors becoming ever more powerful, Intel® put its considerable industry influence behind efforts towards on-board audio. Revision 1 of the company's AC'97 standard for PC audio circuitry debuted in the mid-1990s, with the elimination of ISA in the audio subsystem as one of its stated goals. It was evident that it was also an important step in the trend towards integration.

The AC'97 specification consists of two components: a digital controller (AC-Link), which is built into the Southbridge or I/O Controller Hub (ICH) of a chipset; and an AC'97 codec, the analog component of the architecture, with the former being an obligatory chipset feature. By separating analog and digital functions onto different chips and at the same time merging audio and modem capabilities, the AC'97 specification offered the prospect of integrated the audio and modem subsystems.

Many motherboards soon came with on-board audio, either integrated in the Southbridge/ICH chipset itself or in the form of an add-on IC from a third party manufacturer. Whilst sacrifices - both in terms of features and sound quality - obviously have to be made as a result of the limited space available on a motherboard, by 2003 on-board audio was a match for many analog-only sound cards and arguably capable of providing sound that would satisfy all but the hard-core gamer. Most of today's PC systems offer 44-KHz/I 6-bit stereo CD quality or better, with many adding multiple channels to provide Dolby™ Digital or DTS™-type surround sound experience.

In parallel with the ever-improving audio capabilities provided by PC's, advanced home audio equipment is becoming increasingly more prevalent. For example, technologies such as Dolby™ Digital and DTS™ used to only be available in movie theaters. In many of today's high-end neighborhoods, if you don't have a home theater with multi-channel surround-sound, you aren't keeping up with the Jones.

Another technology that enables the aforementioned audio technologies to be combined is computer networks. With the advent of highly efficient data compression techniques, audio and visual content may be streamed over a network connection to one or more clients, whereupon the content may be rendered (played back) to the enjoyment of the listener or viewer in real- (or near real-) time. However, current content delivery mechanisms are insufficient to support the full capabilities of modern PCs and audio equipment.

More particularly, the current network transfer schemes employ significant software processing at the receiving end to extract the data stream from the network transport mechanism. For example, TCP/IP (Transmission Control Protocol/Internet Protocol) is the most commonly used means for sending traffic over a network. In order to meet line rate requirements, network packets may be dropped or otherwise may be delayed to a point at which they arc useless for a real-time data stream. Under TCP/IP, packet management messages are employed to request a dropped packet to be re-sent from a sender. This creates additional overhead and reduces bandwidth over the channel. Furthermore, since software operations are requirement to perform packet-processing operations at the TCP and IP layers (as well as the MAC layer and possibly other layers) via a corresponding software stack hosted by the operating system, the speed at which the real-time data stream can be processed may depend on the level of additional workload that is being concurrently performed by the processor. The net result is that real-time or near real-time playback of audio and visual content is typically uneven at best, often producing significant levels of jitter and dropped packets. Furthermore, multi-channel support for transmission of audio streams over networks is generally impractical due to the foregoing limitations.

In contrast, there is an escalating need for transmission of high-quality audio and video streams between server and clients, and even between peers. For instance, online gaming involving multiple gamers using peer computers connected over a network is becoming very popular. In order to provide an enhanced experience, there needs to be a mechanism for rapidly transferring data streams between the peer computers. Currently, this need is being unmet.

EP1478172 to Broadcom discloses a single chip cable set-top box to enable the distribution of audio data through a network. The device includes a network termination system that sends data to a number of transceiver systems each of which may include a digital out of band (OOB) modulator at a front-end transceiver.

WO01/50740 discloses a bi-directional transceiver for use in a set-top box which may employ OOB frequencies.

"DOCSIS Set-top Gateway (DSG) Interface Specification" DOCSIS SP-DSG-101-020228, 28 February 2002 (2002-02-28), XP002389408 OpenCable specification discloses a specification for out of band messaging in between a set-top network controller and customer premise equipment.

According to one aspect, the invention provides a method for sending audio content to at least one media client, comprising: reading audio content from media on which the audio content is stored via a media host; employing an out-of-band (OOB) communication channel to transfer the audio content from the media host to the at least one media client; and playing back the audio content at said at least one media client, wherein the OOB communication channel operates in a manner that is transparent to operating systems running on each of the media host and said at least one media client, characterised in that the at least one media client is remote from the media host and connected thereto by a network and the method includes: setting up a virtual audio cable between the media host and a media client, the virtual audio cable comprising a reserved route including at least two network links spanning at least one routing element; routing the audio content via the virtual audio cable using the OOB communication channel; and employing one of multi-protocol label switching (MPLS)-based routing and generalized MPLS (GMPLS)-based routing to facilitate the virtual audio cable.

According to another aspect, the invention provides a system comprising a media host and at least one media client, the media host having an input/output controller hub (ICH) comprising: a media drive controller, to communicate with a Read only Memory (ROM)-based media drive; an embedded audio sub-system to process audio data read from a media drive via the media drive controller; and an embedded local area network (LAN) microcontroller, including, a processor; a network interface, coupled to the processor; and memory, to store instruction to support processing operations corresponding to an out-of-band (OOB) networking stack when executed on the processor; characterised in that, the at least one media client is remote from the media host and connected thereto by a network and the system includes: a virtual audio cable between the media host and a media client, the virtual audio cable comprising a reserved route including at least two network links spanning at least one routing element; the virtual audio cable is operable to route audio content from the media host to the at least one media client via the virtual audio cable using the OOB communication channel employing one of multi-protocol label switching (MPLS)-based routing and generalized MPLS (GMPLS)-based routing to facilitate the virtual audio cable.

### BRIEF DESCRIPTION OF THE DRAWINGS

The foregoing aspects and many of the attendant advantages of this invention will become more readily appreciated as the same becomes better understood by reference to the following detailed description, when taken in conjunction with the accompanying drawings, wherein like reference numerals refer to like parts throughout the various views unless otherwise specified:
Figure 1 is a schematic diagram of a platform architecture employed at a media host and media client to perform an out-of-band (OOB) transfer of audio data from the media host to one or more media clients, according to one embodiment of the invention;
Figure Ia is a schematic diagram of a platform architecture that is similar to that shown in Figure 1, except the ICH now includes an embedded LAN microcontroller,
Figure 2 is a schematic diagram of a system architecture including a media host and media clients, and the diagram further depicts operations performed at the media host and media client to facilitate transfer of audio content via an OOB communications channel;
Figure 3 is a flowchart illustrating further details of operations performed by the media host and media client of Figure 2;
Figure 4 is a schematic diagram illustrating the primary building blocks defined by the High Definition Audio Specification;
Figure 5 is a schematic diagram of an High Definition Audio frame format;
Figure 6 is a schematic diagram of an exemplary High Definition Audio function group;
Figure 7 is a schematic diagram of Audio Output Converter Widget defined by the High Definition Audio Specification;
Figure 8 is a flowchart illustrating operations employed to set up a virtual audio cable comprising a label-switched path (LSP) tunnel;
Figure 9 is a block diagram illustrating message flows in connection with RSVP messages;
Figure 10 is a flowchart illustrating operations performed to support remote audio playback, wherein the audio content is transferred via the OOB communications channel in the form of High Definition Audio frames, according to one embodiment of the invention; and
Figure 11 is a schematic block diagram illustrating components of a LAN microcontroller used in the architectures of Figures 1 and 1a, according to one embodiment of the invention.

### DETAILED DESCRIPTION

Embodiments of methods and apparatus for providing audio content to remote clients are described herein. In the following description, numerous specific details are set forth to provide a thorough understanding of embodiments of the invention. One skilled in the relevant art will recognize, however, that the invention can be practiced without one or more of the specific details, or with other methods, components, materials, *etc.* In other instances, well-known structures, materials, or operations are not shown or described in detail to avoid obscuring aspects of the invention.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

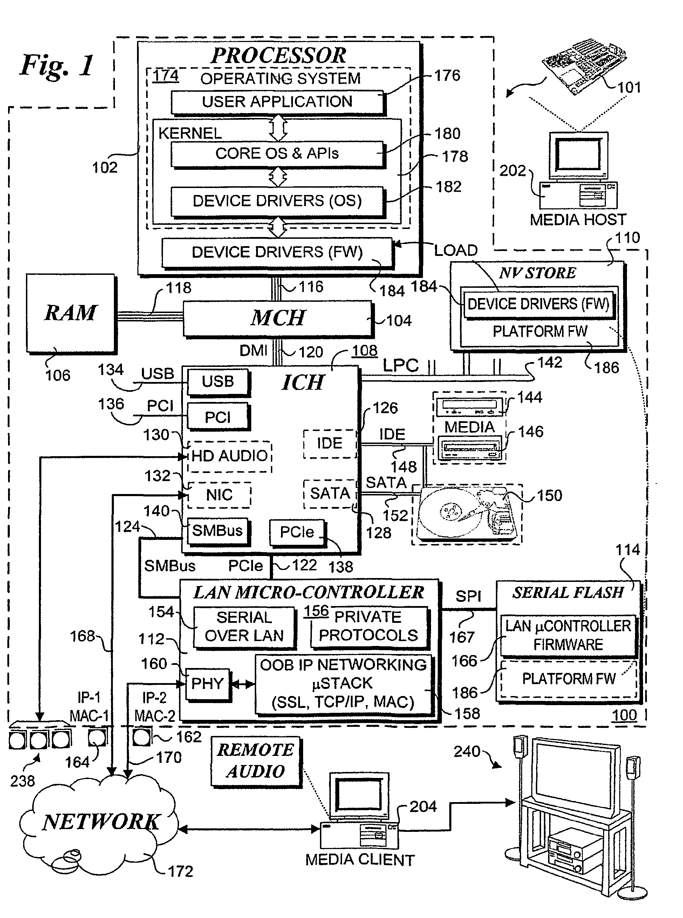

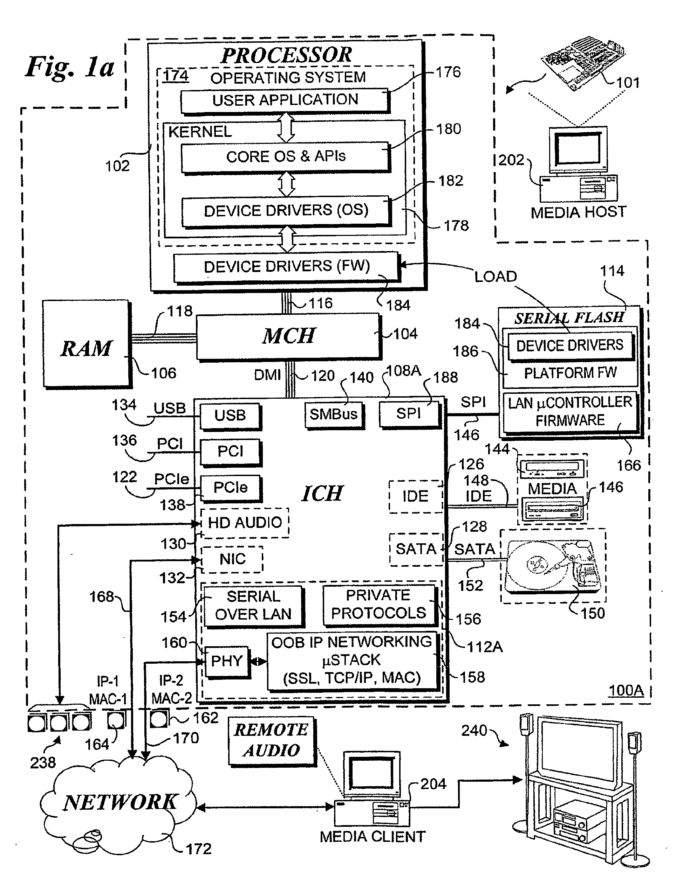

Figure 1 shows a platform architecture 100 that may be used to implement media host- and media client-side aspects of the remote audio embodiments discussed herein. The architecture includes various integrated circuit components mounted on motherboard or main system board 101. The illustrated components include a processor 102, a memory controller hub (MCH) 104, random access memory (RAM) 106, an input/output (I/O) controller hub (ICH) 108, a non-volatile memory (NV) store 110, a local area network (LAN) microcontroller (µC) 112, and a serial flash chip 114. In one embodiment, a graphics memory controller hub ((G)MCH) is employed in place of MCH 104, and is coupled to an advance graphics port (both not shown). Processor 102 is coupled to MCH 104 via a bus 116, while MCH 104 is coupled to RAM 106 via a memory bus 118 and to ICH 108 via an I/O bus comprising a Direct Media Interface (DMI) 120.

In the illustrated embodiment of Figure 1, ICH 108 is coupled to LAN microcontroller 112 via a peripheral component interconnect (PCI) Express (PCIe) serial interconnect 122. In one embodiment, ICH 108 is further coupled to LAN microcontroller 112 via a System Management bus (SMBus) 124.

In the illustrated embodiment of Figure 1, ICH 108 includes various embedded components, including an integrated drive electronics (IDE) controller 126, a Serial ATA (SATA) controller 128, a High Definition Audio sub-system 130, and a network interface controller (NIC) 132. In addition, ICH 108 also provides various I/O interfaces and ports, including a universal serial bus (USB) port 134, a PCI bus 136, a PCIe interface 138, an SMBus interface 140, and a low pin count (LPC) bus 142. In one embodiment, NV store 110 is connected to ICH 108 via LPC bus 142.

IDE controller 126 is illustrative of various types of IDE-based controllers, including Enhanced IDE (EIDE) controllers, ATA controllers and ATAPI controllers. IDE controller 126 is used to communicate with various I/O storage and/or ROM devices, such as a DVD drive 144 and a CD-ROM drive 146, which are connected to IDE controller 126 via an IDE cable 148. Typically, DVD drives and CD-ROM drives employ the ATAPI interface protocol, although other protocols may also be used. IDE controller 126 may also be used to communicate with an IDE or ATA hard disk drive (HDD), such as depicted by an HDD 150.

SATA controller 128 comprises a next generation I/O device controller that provides enhanced performance over parallel-based standards such as IDE and ATA. In one embodiment, SATA controller 128 is a 4-port controller, which is connected to one or more HDDs 150 via a Serial ATA cable 152. SATA controller 128 is compliant with the Advanced Host Controller Interface (AHCI), which is an industry-defmed specification for Serial ATA host controller registers and command operations.

LAN microcontroller 112 is configured to perform various operations that are facilitated via corresponding functional blocks. These include a serial over LAN block 154, a private protocols block 156, and an out-of-band (OOB) Internet Protocol (IP) networking microstack 158. The OOB IP networking microstack 158 supports IP networking operations that enable external devices to communicate with LAN microcontroller 112 via a conventional Ethernet connection using the physical layer (PHY) 160 defined by the Ethernet standard. Accordingly, LAN microcontroller 112 also provides a LAN µC Ethernet port 162. Meanwhile, NIC 132 interfaces with Ethernet traffic via a separate NIC Ethernet port 164.

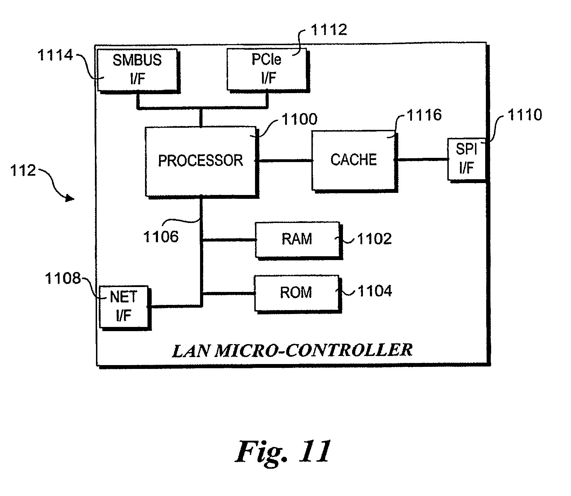

In one embodiment, to effectuate the operation of its various functional blocks, LAN microcontroller 112 loads LAN microcontroller firmware 166 from serial flash chip 114 and executes the firmware instructions on its built-in processor. (Details of one embodiment of the LAN microcontroller hardware architecture are shown in Figure 11 and discussed below). In one embodiment, the transfer of data from serial flash chip 114 to LAN microcontroller 112 is facilitated by a Serial Peripheral Interface (SPI) 167. In another embodiment, all or a portion of the LAN microcontroller functionality is performed via programmed hardware logic.

To facilitate concurrent and separate usage, each of NIC Ethernet port 164 and LAN µC Ethernet port 162 have respective media access control (MAC) addresses and respective IP addresses. For simplicity, the respective MAC addresses are depicted as MAC-1 and MAC-2, while the respective IP addresses are depicted as IP-1 and IP-2. In general, NIC Ethernet port 164 and LAN µC Ethernet port 162 support respective links 168 and 170 to network 172 using conventional LAN operations and protocols. Optionally, LAN microcontroller 112 may also employ private protocols over the Ethernet physical transport.

As described in further detail below, LAN microcontroller 112 enables audio data to be transmitted from a media host to a media client having a similar LAN microcontroller using an OOB communication channel. What "out-of-band) means is that these data transport operations are performed "behind the scenes" in a manner that is transparent to the operating system (OS) running on each of the media host and media client. As a result, there is no operating system load to perform the audio data transfer and to perform post-transfer signal processing, resulting in higher transmission rates and enhanced reproduction fidelity. Furthermore, since the operations are performed independent of the operating systems, variances in the CPU process consumption on either the media host or media client will have negligible effect, if any, on the playback quality at the media client.

Although the foregoing operations are performed transparent to the operation systems on the media host and clients, the operating system is employed for setting up communication links comprising "virtual audio cables" between the media host and clients, as described below. In addition, firmware components are also employed. Accordingly, Figure 1a depicts various operating system and firmware components, including an operating system 174 including a user space in which user applications 176 are run and an OS kernel 178 including core OS and Application Program Interfaces (APIs) 180 and OS device drivers 182. The illustrated firmware components include firmware device drivers 184.

In one embodiment, platform firmware 184 including firmware device drivers 184 are stored in NV store 110 and loaded during platform initialization (e.g., initialization of a media host or media client) via ICH 108. In another embodiment, NV store 110 does not exist, and platform firmware 186 is stored in serial flash 114 and is loaded via LAN microcontroller 112 and ICH 108.

Figure 1a shows a platform architecture 100A depicting an alternative to platform architecture 100 of Figure 1. In general, like-numbered components in both Figures 1 and 1a before similar operations. Accordingly, only the differences between the embodiments will now be described.

Under platform architecture 100A, an ICH 108A is implemented that includes embedded LAN microcontroller components 112A corresponding to similar components employed by LAN microcontroller 112. ICH 108A also includes an SPI interface 188. As depicted in Figure 1a, each of platform firmware 186 and LAN microcontroller firmware 166 are stored in serial flash 114, which is accessed by ICH 108A via SPI interface 188 and an SPI link 167A.

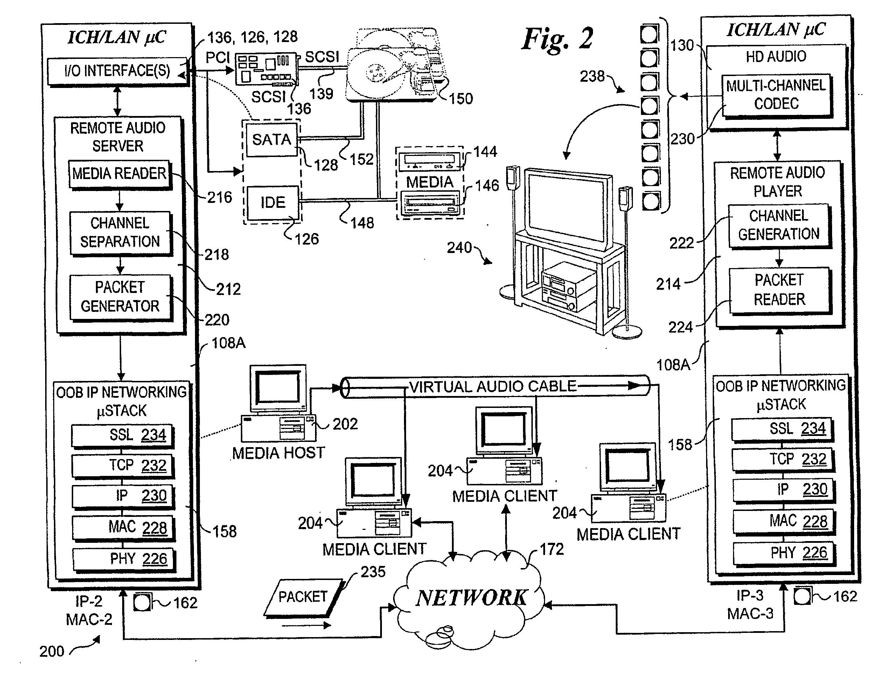

Figure 2 shows a system architecture 200 under which a media host 202 is enabled to transmit audio content to be rendered at multiple media clients 204 via a virtual audio cable 206. Each of media host 202 and media clients 204 employ a platform architecture 100 (Figure 1) or 100A (Figure 1a). For simplicity, use of ICHs 108A are shown in Figure 2. However, it will be understood separate ICH and LAN microcontrollers may be implemented in a similar manner.

In addition to the I/O mechanisms for accessing storage devices shown in Figures 1 and 1A, system architecture 200 further depicts accessing HDDs 150 via a SCSI (Small Computer System Inteface) controller card 208 and SCSI cable 210. In one embodiment, SCSI controller card 208 comprises a PCI add-on peripheral card that is operatively coupled via a PCI connector on motherboard 101 to PCI bus 136. It is further noted that a SCSI controller card may be employed to access various types of SCSI devices, including SCSI CD-ROM drives and SCSI DVD drives.

The ICH 108A of Media host 202 includes a remote audio server 212, while each of media clients 204 include a remote audio player 214. Remote audio server 212 includes a media reader 216, a channel separation block 218, and a packet generator 220. Remote audio player 214 includes a channel generation block 222 and a packet reader 224.

Each of media host 202 and media clients 204 include a respective OOB IP networking microstack 158. In one embodiment, each OOB IP networking microstack includes a PHY layer 226, a MAC layer 228, an IP layer 230, a TCP layer 232, and an SSL (Secure socket layer) 234.

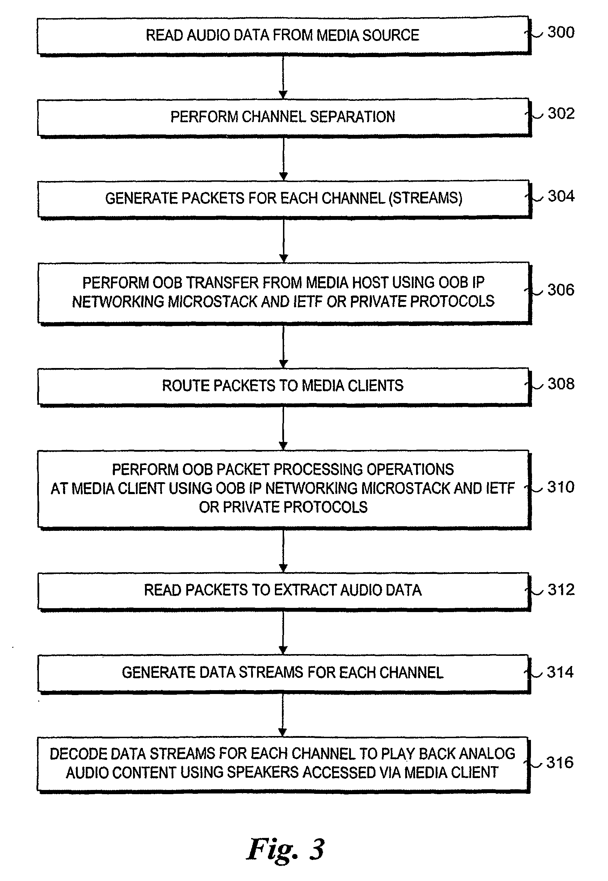

With reference to the flowchart of Figure 3, operations corresponding to one technique for transferring audio data from media host 202 to media clients 204 and rendering corresponding audio content at the media clients proceeds as follows. The process begins in a block 300, wherein the audio data is read from a media source. For example, the media source may be a CD-ROM or a DVD that is respectively read by CD-ROM drive 146 and DVD drive 148. Each of these storage media disks employs a corresponding encoding format. Optionally, the audio data may be stored on an HDD 150 in one of many known compressed encoding formats, such as MP3, AAC, MPEG audio, *etc.* HDD 150 may also store audio data in uncompressed formats, such as native CD-ROM and DVD formats.

In general, the audio data read operation of block 300 is managed by media reader 216 using appropriate commands to the controller used to access the storage device on which the audio data are stored or may be accessed. Media reader 216 also includes decoding facilities for converting the audio data from an initial format to a format suitable for subsequent HD audio processing in the manner described below.

Continuing at a block 302 in Figure 3, the next operation is channel separation, which is performed by channel separation block 218. In general, HD audio is able to support multiple channels (up to 16 under the current specification). Audio data may likewise be encoded in multiple channels. The simplest multi-channel encoding format is stereo. More complex surround-sound encoding formats may use many more channels, which each channel including audio data that is to be played on a corresponding audio output device, such as a surround-sound speaker or sub-woofer. The number of channels to be separated will depend on the channel format of the original audio data.

In a block 304, a stream of packets are generated for each audio channel by packet generator 220. Various packet generation options are discussed below. Each packet will include a destination address (IP or MAC or both) via which that packet may be routed to an appropriate media client. Under a broadcast embodiment, a separate set of packet streams are (substantially) concurrently generated for each destined media client.

In a block 306, an OOB transfer of the packets is performed from media host 202 to media clients 204 using the OOB IP networking microstack and an IETF (Internet Engineering Task Force) or private protocol. In order to send packets over a physical medium (Ethernet, in this instance), there needs to be an appropriate transport mechanism that is employed. In one embodiment, the transport mechanism is TCP/IP, the transport mechanism employed for the vast majority of today's network traffic. In another embodiment, optional transport mechanisms may be employed, such as UDP (user datagram protocol) and even private protocols. In general, any IETF protocol may be employed to perform the transport. In such cases that protocols other than TCP/IP are used, a corresponding set of network stack elements would be employed in place of those shown for OOB IP networking microstack 158.

In one embodiment, SSL layer 234 is used to support a secure transfer mechanism, which includes conventional SSL operations, such as SSL handshakes. The SSL layer employs encryption to transfer data in an encrypted form. This prevents streamed audio content from being captured by intruders and the like. In one embodiment, the LAN microcontroller includes support for hardware based encryption. In another embodiment, SSL encryption operations are supported via execution of LAN microcontroller firmware 166.

On the transmit side (*i.e.,* media host 202), the various layers in the OOB IP networking microstack are used to prepare the packets to be transported over network 172. The prepared packets 235 are then routed via network 172 to media clients 204 in a block 308. At the receive side (*i.e.,* media clients 204), the OOB IP networking microstack layers are used to process the packets that are received in view of the transport protocol that is used, as depicted in a block 310.

Once the received packets are processed by OOB IP networking microstack 158, they are passed to remote audio player 214. In one embodiment, remote audio player 214 emulates a media reader component used to provide audio data to HD audio sub-system 130 in a manner under which the HD audio sub-system "thinks" the audio data is being read from a local media drive or storage device. This includes the operations of employing packet reader 224 to extract the audio data from the processed packets and to generate data streams for each channel via channel generation block 222, as depicted by respective blocks 312 and 314 in Figure 3. The channelized audio data are then provided to HD audio sub-system 130 in a block 316, whereupon they are decoded using one or more codecs (depicted as a multi-channel codec 236 for simplicity) and provided in analog form to audio outputs 238. Appropriate audio cables coupled to audio outputs 238 are then used to provide the analog audio signals to corresponding speakers, such as those contained in a home media entertainment system 240.

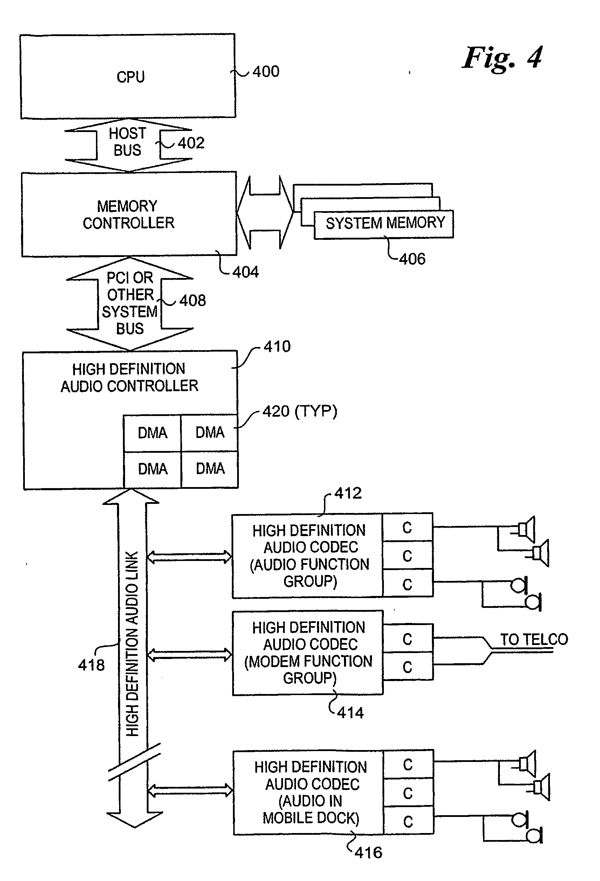

Figure 4 shows the building blocks that make up the High Definition Audio architecture as defined by the current HD Audio standard (High Definition Audio Specification, Version 1, April 15, 2004), which is available at www.intel.com/standards/hdaudio, hereinafter the High Definition Audio Specification). The building blocks include a CPU 400, a host bus 402, a memory controller 404, system memory 406, a PCI or other system bus interface 408, a High Definition Audio controller 410, and High Definition Audio codecs corresponding to an audio function group 412, a modem function group 414, and an audio in mobile dock 416, each of which is coupled to High Definition Audio controller 410 via a high definition audio link 418.

The High Definition Audio controller is a bus mastering I/O peripheral, which is attached to system memory 406 via PCI or other system bus interface 408 (e.g., DMI). It contains one or more DMA (Direct Memory Access) engines 420, each of which can be set up to transfer a single audio "stream" to memory from the codec or from memory to the codec depending on the DMA type. The controller implements all the memory mapped registers that comprise the programming interface as defined in Section 3.3 of the High Definition Audio Specification.

The HD audio controller is physically connected to one or more codecs via the HD audio link 418. The link conveys serialized data between the controller and the codecs. It is optimized in both bandwidth and protocol to provide a highly cost effective attach point for lost-cost codecs. The link also distributes the sample rate time base, in the form of a link *bit clock (BCLK),* which is generated by the controller and used by all codecs. The link protocol supports a variety of sample rates and sizes under a fixed data transfer rate.

One or more codecs connect to HD audio link 418. A codec extracts one or more audio streams from the time multiplexed link protocol and converts them to an output stream through one or more converters (marked "C"). A converter typically converts a digital stream into an analog signal (or vise versa), but may also provide additional support functions of a modem and attach to a phone line, or it may simply demultiplex a stream from the link and deliver it as a single (un-multiplexed) digital stream, as in the case of S/PDIF. The number and type of converters in a codec, as well as the type of jacks or connectors it supports, depend on the codec's intended function. The codec derives its sample rate clock from a clock broadcast (BCLK) on the link. HD audio codecs are operated on a standardized command and control protocol as defined in Section 4.4 of the High Definition Audio Specification. The outputs from the converters are used to drive *acoustic devices,* which include speakers, headsets, and microphones.

Figure 4 illustrates that codecs can be packaged in a variety of ways, including integration with the HD audio controller, permanent attachment on the motherboard, modular ("add-in") attachment, or included in a separate sub-system such as a mobile docking station. In general, the electrical extensibility and robustness of the link is the limiting factor in packaging options.

The High Definition Audio architecture introduces the notion of streams and channels for organizing data that is to be transmitted across the High Definition Audio link. A *stream* is a logical or virtual connection created between a system memory buffer(s) and the codec(s) rendering that data, which is driven by a single DMA channel through the link. A stream contains one or more related components or *channels* of data, each of which is dynamically bound to a single converter in a codec for rendering. For example, a simple stereo stream would contain two channels: left (L) and right (R). Each sample point in that stream would contain two samples: L and R. The samples are packed together as they are represented in the memory buffer or transferred over the link, but each are bound to a separate digital-to-analog converter (DAC) in the codec.

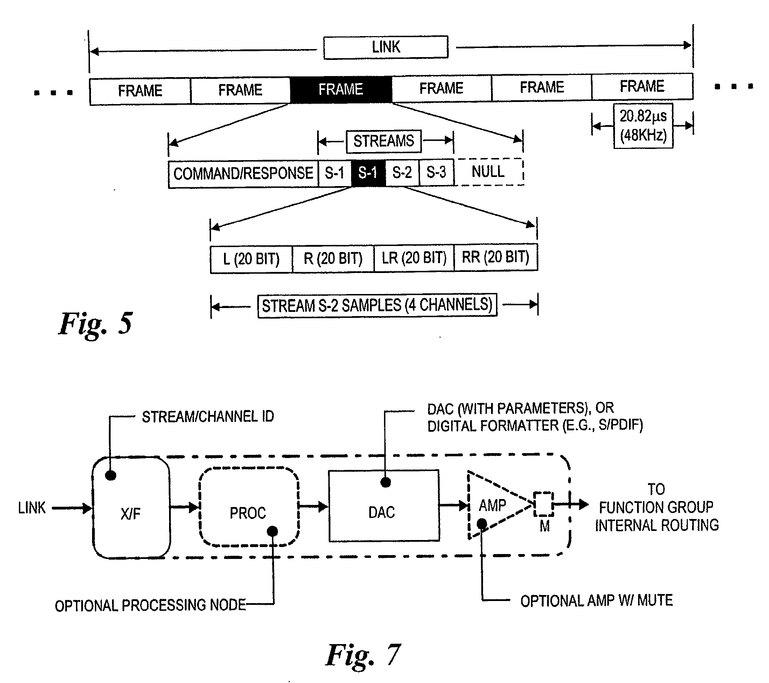

Figure 5 shows how streams and channels are transferred on the link. Each input or output signal in the link transmits a series of packets or *frames.* A new frame starts exactly every 20.83 µs, corresponding to the common 48-kHz sample rate.

The first breakout in Figure 5 shows that each frame contains command or control information and then as many stream sample blocks (labeled S-1, S-2, S-3) as are needed. The total number of streams supportable is limited by the aggregate content of the streams; any unused space in the frame is filled with nulls. Since frames occur at a fixed rate, if a given stream has a sample rate that is higher or lower than 48 kHz, there will be more or less than one sample block in each frame for that stream. Some frames may contain two sample blocks (e.g., two S-2 blocks in this illustration) and some may contain none. Section 5.4.1 of the High Definition Audio Specification describes in detail the methods of dealing with sample rates other than 48 kHz.

The second breakout in Figure 5 shows that a single stream 2 (S-2) sample block is composed of one sample for each channel in that stream. In this illustration, stream 2 (S-2) has four channels (L, R, LR, RR) and each channel has a 20-bit sample; therefore, the stream sample block uses 80 bits. Note that stream 2 (S-2) is a 96 kHz stream, since two sample blocks are transmitted per 20.83 µs (48 kHz) frame.

The High Definition Audio Specification defines a complete codec architecture that is fully discoverable and configurable so as to allow a software or firmware driver to control all typical operations of any codec. While this architectural objective is immediately intended for audio codecs, it is intended that such a standard software/firmware driver model not be precluded for modems and other codec types (*e.g.,* HDMI, *etc.*)*.* This goal of the architecture does not imply a limitation on product differentiation or innovative use of technology. It does not restrict the actual implementation of a given function but rather defines how that function is discovered and controlled by the software/firmware function driver.

The High Definition Audio Codec Architecture provides for the construction and description of various codec functions from a defined set of parameterized modules (or building blocks) and collections thereof. Each such module and each collection of modules becomes a uniquely addressable *node,* each parameterized with a set of read-only capabilities or *parameters,* and a set of read-write commands or *controls* through which that specific module is connected, configured, and operated.

The codec architecture organizes these nodes in a hierarchical or tree structure starting with a single *root node* in each physical codec attached to the Link. The root node provides the "pointers" to discover the one or more *function group(s)* which comprise all codecs. A function group is a collection of directed-purpose modules (each of which is itself an addressable node) all focused to a single application/purpose, and that is controlled by a single software/firmware function driver; for example, an Audio Function Group (AFG) or a modem function group.

Each of these directed-purpose modules within a function group is referred to as a *widget,* such as an I/O Pin Widget or a DAC Widget. A single function group may contain multiple instances of certain widget types (such as multiple Pin Widgets), enabling the concurrent operation of several channels. Furthermore, each widget node contains a configuration parameter that identifies it as being "stereo" (two concurrent channels) or "mono" (single channel).

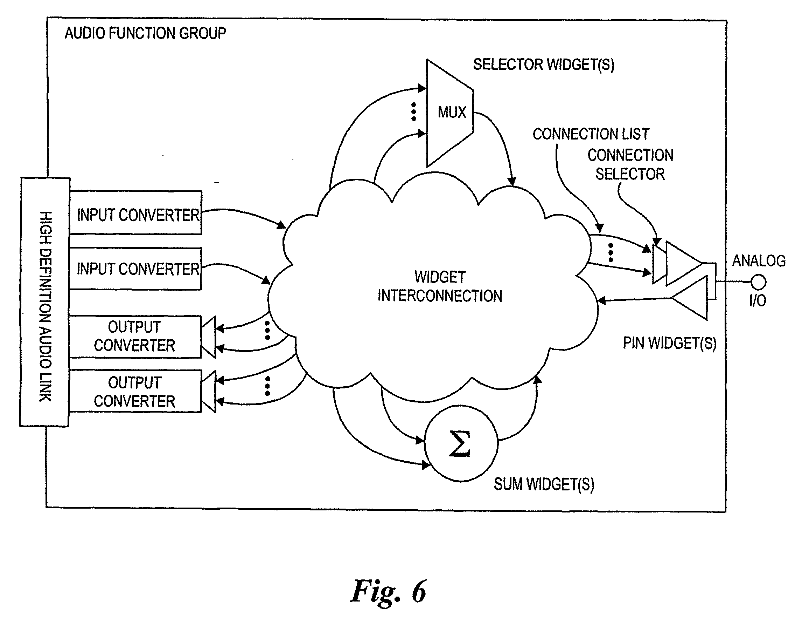

Figure 6 illustrates an Audio Function Group, showing some of the defined widgets and the concept of their interconnection. Some of these widgets have a digital side that is connected to the High Definition Audio Link 418 interface, in common with all other such widgets from all other function groups within this physical codec. Others of these widgets have a connection directly to the codec's I/O pins. The remaining interconnections between widgets occur on-chip, and within the scope of a single function group.

Each widget drives its output to various points within the function group as determined by design (shown as an interconnect cloud 600 in Figure 6). Potential inputs to a widget are specified by a connection list (configuration register) for each widget and a connection selector (command register), which is set to define which of the possible inputs is selected for use at a given moment. The exact number of possible inputs to each widget is determined by design; some widgets may have only one fixed input while others may provide for input selection among several alternatives. Note that widgets that utilize only one input at a time (*e.g*., Pin Widget) have an implicit 1-of-n selector at their inputs if they are capable of being connected to more than one source, as shown in the Pin Widget example of Figure 6. Widgets within a single functional unit have a discoverable and configurable set of interconnection possibilities.

The Audio Function Group contains the audio functions in the codec and is enumerated and controlled by the audio function driver. An AFG may be designed/configured to support an arbitrary number of concurrent audio channels, both input and output. An AFG is a collection of zero or more of each of the following types of widgets: Audio Output Converter; Audio Input Converter; Pin Complex; Mixer (Summing Amp); or 1-of-N Input Selector (multiplexer).

A *widget* is the smallest enumerable and addressable module within a function group. A single function group may contain several instances of certain widgets. For each widget, there is defined a set of standard parameters (capabilities) and controls (command and status registers). Again, each widget is formally defined by its own set of parameters (capabilities) and controls (command and status registers); however, since some parameters and controls are formatted to be used with multiple different widget types, it is easier to first understand widgets at the qualitative level provided in this section. Thereafter, the exact data type, layout, and semantics of each parameter and control are defined in Section 7.2.3.7. of the High Definition Audio Specification. Currently defined widgets are: Audio Output Converter Widget; Audio Input Converter Widget; Pin Widget; Mixer (Summing Amp) Widget; Selector (Multiplexer) Widget; and Power Widget. In addition to these standard widgets defined in this specification, it is possible for vendors to define other proprietary widgets for use in any proprietary function groups they define.

The Audio Output Converter Widget, depicted in Figure 7 is primarily a DAC for analog converters or a digital sample formatter (*e.g.,* for S/PDIF) for digital converters. Its input is always connected to the High Definition Audio Link interface in the codec, and its output will be available in the connection list of other widget(s), such as a Pin Widget. This widget may contain an optional output amplifier, or a processing node, as defined by its parameters. Its parameters also provide information on the capabilities of the DAC and whether this is a mono or stereo (1- or 2-channel) converter. The Audio Output Converter Widget provides controls to access all its parametric configuration state, as well as to bind a stream and channel(s) on the Link to this converter. In the case of a 2-channel converter, only the "left" channel is specified; the "right" channel will automatically become the next larger channel number within the specified stream.

As discussed above and depicted in Figure 2, in one embodiment audio data is sent in a packetized from using an OOB virtual audio cable. In one embodiment, the virtual audio cable comprises a reserved route comprising one or more network links that is dedicated to providing a predefined QoS (Quality of Service) level.

Under a typical network comprising multiple network elements, such as routers, switches, hubs, bridges, *etc.,* the network links are configured in a web-like manner so as to provide redundant route capabilities. Networks are typically configured in this manner so that links may be periodically taken down and added without disturbing the overall network operation. Under conventional routing schemes, each routing element will determine the next best hop to reach the destination for a given packet (as defined by the packet's destination address) in view of current traffic conditions and the "view" that routing element has of the network topography (*e.g*., via routing or forwarding table data). The net result of this is that two packets routed between the same source and destination addresses may take different routes.

While network element-based routing adds to network integrity, it deters good QoS for real-time audio channels. One reason is that packets may be received out of order at the destination, requiring excessive buffering that leads to jitter, missed data, and other types of channel deterioration. Worse yet, packets may be dropped due to traffic conditions.

Under one embodiment, the problems of out of order packets and dropped packets are substantially eliminated by employing source routing using reserved route link bandwidth. Under source routing, the route used by a packet may be explicitly defined in advance at the source (*i.e.,* the sending machine). Under a label based routing scheme, such as multi-protocol label switching (MPLS)-based routing and generalized MPLS (GMPLS) routing, labels are employed to specify the routing for corresponding packets containing specific label information in their headers. Furthermore, link bandwidth reservation schemes such as RSVP (ReSerVation Protocol) and RSVP-TE (Traffic Engineering) may be employed to establish and reserve link bandwidth for label-based routing schemes.

Under one embodiment, an extended RSVP-TE protocol in accordance with the IETF Network Working Group RFC 3209 (RSVP-TE: Extensions to RSVP for LSP Tunnels) is used to define label switched paths (LSP) comprising the virtual audio cables. Under RFC 3209, hosts and routers that support both RSVP and MPLS can associate labels with RSVP flows. When MPLS and RSVP are combined, the definition of a flow can be made more flexible. Once an LSP is established, the traffic through the path is defined by the label applied at the ingress node of the LSP. The mapping of label to traffic can be accomplished using a number of different criteria. The set of packets that are assigned the same label value by a specific node are said to belong to the same forwarding equivalence class (FEC), and effectively define the "RSVP flow." When labels are associated with traffic flows, it becomes possible for a router to identify the appropriate reservation state for a packet based on the packet's label value.

Since the traffic that flows along a label-switched path is defined by the label applied at the ingress node of the LSP, these paths can be treated as tunnels, tunneling below normal IP routing and filtering mechanisms. Thus, when an LSP is used in this manner it is referred to an LSP tunnel.

The signaling protocol model uses downstream-on-demand label distribution. A request to bind labels to a specific LSP tunnel is initiated by an ingress node through the RSVP *Path* message. For this purpose, the RSVP *Path* message is augmented with a LABEL_REQUEST object. Labels are allocated downstream and distributed (propagated upstream) by means of the RSVP *Resv* message. For this purpose, the RSVP *Resv* message is extended with a special LABEL object. The procedures for label allocation, distribution, binding, and stacking are described in detail in the RFC 3209 document.

The signaling protocol model also supports explicit routing capability. This is accomplished by incorporating a simple EXPLICIT_ROUTE object into RSVP *Path* messages. The EXPLICIT_ROUTE object encapsulates a concatenation of hops which constitutes the explicitly routed path. Using this object, the paths taken by label-switched RSVP-MPLS flows can be pre-determined, independent of conventional IP routing. The explicitly-routed path can be administratively specified, or automatically computed by a suitable entity based on QoS and policy requirements, taking into consideration the prevailing network state.

An advantage of using RSVP to establish LSP tunnels is that it enables the allocation of resources along the path. For example, bandwidth can be allocated to an LSP tunnel using standard RSVP reservations and Integrated Services service classes. Thus, predefined QoS requirements can be substantially guaranteed using such LSP tunnels (if adequate link resources are available at the time of the reservation and during the reserved period).

A route reservation scheme employing GMPLS labels for optical networks is disclosed in IETF Network Working Group RFC 3473: Generalized Multi-Protocol Label Switching (GMPLS) Signaling Resource ReserVation Protocol-Traffic Engineering (RSVP-TE) Extensions. Generalized MPLS extends the MPLS control plane to encompass time-division (e.g., Synchronous Optical Network and Synchronous Digital Hierarchy, SONET/SDH), wavelength (optical lambdas) and spatial switching (e.g., incoming port or fiber to outgoing port or fiber).

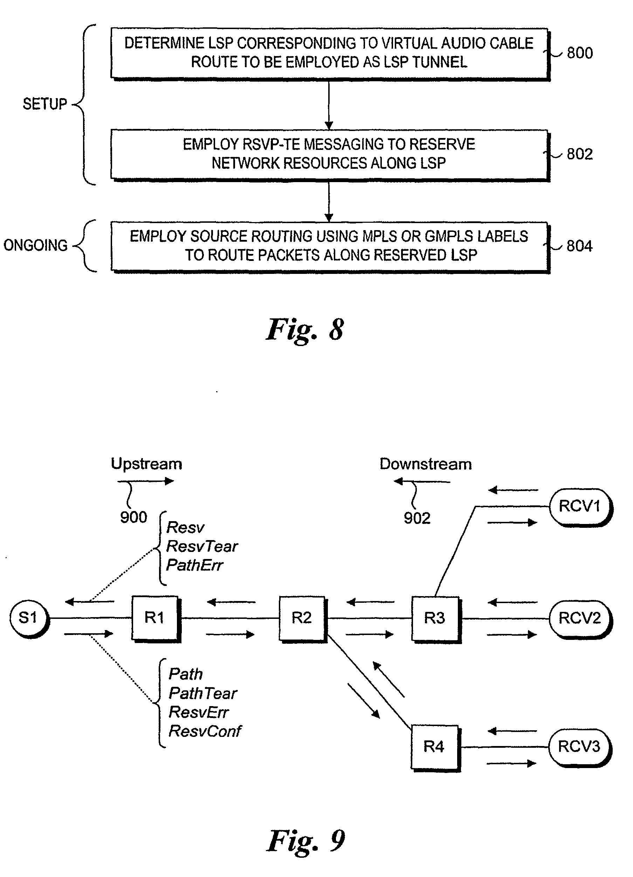

Figure 8 is a flowchart illustrating operations performed by one embodiment to define a virtual audio cable. The process begins in a block 800, wherein the label-switched path corresponding to the virtual audio cable route to be employed as an LSP tunnel is determined. Various techniques, known to those skilled in the networking routing arts, may be used to determine the best route; however, such techniques are beyond the scope of the present disclosure.

Once the route has been determined, RSVP-TE messaging is employed to reserve network resources along the LSP using the techniques disclosed in RFC 3209 (for MPLS) or RFC 3473 (For GMPLS). In general, the RSVP-TE protocol is itself an extension of the RSVP protocol, as specified in IETF RFC 2205. RSVP was designed to enable the senders, receivers, and routers of communication sessions (either multicast or unicast) to communicate with each other in order to set up the necessary router state to .. support various IP-based communication services. RSVP identifies a communication session by the combination of destination address, transport-layer protocol type, and destination port number. RSVP is not a routing protocol, but rather is merely used to reserve resources along an underlying route, which under conventional practices is selected by a routing protocol.

Figure 9 shows an example of RSVP for a multicast session involving one traffic sender S1, and three traffic receivers, RCV1, RCV2, and RCV3. The diagram in Figure 9 is illustrative of the general RSVP operations, which may apply to unicast sessions as well. Upstream messages 900 and downstream messages 902 sent between sender S1 and receivers RCV1, RCV2, and RCV3 are routed via routing components (e.g., switching nodes) R1, R2, R3, and R4. The primary messages used by RSVP are the *Path* message, which originates from the traffic sender, and the *Resv* message, which originates from the traffic receivers. The primary roles of the *Path* message are first to install reverse routing state in each router along the path, and second to provided receivers with information about the characteristics of the sender traffic and end-to-end path so that they can make appropriate reservation requests. The primary role of the *Resv* message is to carry reservation requests to the routers along the distribution tree between receivers and senders. The *PathTear* message is employed to request the deletion of a connection. A corresponding *ResvTear* message is issued in response to a *PathTear* message by an appropriate receiver.

Once the LSP tunnel is set-up in block 802, ongoing operations are performed in a block 804, wherein source routing employing MPLS or GMPLS labels is employed to route packets along the reserved label-switched path.

In general, the setup operations of block 802 may be employed using in-band network messaging under the control of a user application running on an operating system. Meanwhile, the operations of block 804 employ OOB network packet transfers using LAN microcontroller elements at each of the media host and media client.

Under some environments, such as homes and small offices, only a single routing element may exist, such as a switch or hub, and the various computers are connected to that routing element in (effectively) a star configuration, with the routing element at the center. Accordingly, there is only a single route between any two endpoints, and thus there are no routing decisions to make (the routes are static). Thus, some of the overhead associated with packet routing may be eliminated.

In other environments, two or more computers may be connected in a peer-to-peer configuration that does not employ a routing element. Under the conventional approach, software facilities in the operating system are used to enable peer-to-peer networking. Similarly, embodiments of the LAN microcontroller may be employed to perform OOB peer-to-peer networking operations in a manner that is transparent to the OS.

Under one embodiment, packets are transferred between a media host and one or more media clients using virtual audio cables comprising a single route or peer-to-peer route using a private protocol implemented over the basic Ethernet layer(s) (MAC and PHY layers or simply PHY layer). Under the seven-layer OSI (Open Systems Interconnection) model, the private protocol may be implemented at the network layer and above. The particular protocol parameters to be employed are left to the engineer. In general, the private protocol may be implemented via firmware implemented in the LAN microcontroller. Optionally, all or a portion of the private protocol may be implemented via programmed logic in the LAN microcontroller or ICH.

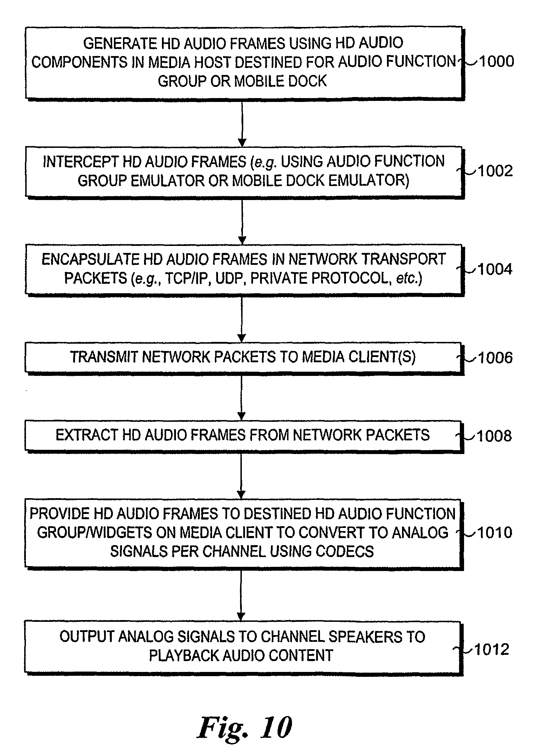

In one of the embodiments discussed above, audio data was provided to a media client in a manner that appeared to the media client that the audio data was being accessed from a local media drive. In accordance with the embodiment of Figure 10, the audio data is initially processed by HD audio sub-system components at the media host to generate HD audio frames, which are then packetized and transferred to one or more media clients. The HD audio frames are then extracted and provided to appropriate HD audio components in the HD audio sub-system of the media client for playback.

The process starts in a block 1000, wherein HD audio frames are generated at the media host. In general, the HD audio frames are internally generated by the HD audio components, and are destined for one of an Audio Function Group or mobile dock. Control of the HD audio frame destination may be implemented by an appropriate HD audio firmware driver or OS driver. Setup operations may further be provided by an OS user application that interfaces with the OS and/or firmware driver.

As the HD audio frames are generated, they are forwarded to an appropriate destination in the manner defined by the HD Audio Specification. However, rather than reaching their intended destination, they are captured or intercepted in a block 1002. For example, this may be accomplished by emulating an audio function group or a mobile dock, such that the HD audio frames are provided to a virtual audio function group or virtual mobile dock being emulated.

In a block 1004, the HD audio frames are encapsulated in network transport packets corresponding to the underlying network transport mechanism selected to transfer the audio frames from the media host to the media client(s). For instance, transport protocols such as TCP/IP, UDP, or even private protocols may be used for this purpose. The network packets are then transmitted to the media client(s) in a block 1006 using the selected transport mechanism.

Upon receiving the network packets at a client, the HD audio frames are extracted from the packets in a block 1008. The HD audio frames are then provided to the destined HD audio function group and/or widgets on the HD audio sub-system hosted by the media client in a block 1010, whereupon the audio data is converted into analog signals per each applicable channel using corresponding audio codecs. The analog signals are then output to channel speakers communicatively coupled to the media client to playback the audio content in a block 1012.

Figure 11 shows details of a hardware architecture corresponding to one embodiment of LAN microcontroller 112. Similar components may be included as part of the embedded LAN microcontroller 112A in Figure 1a. The LAN microcontroller includes a processor 1100, coupled to random access memory (RAM) 1102 and read-only memory (ROM) 1104 via a bus 1106. The LAN microcontroller further includes multiple I/O interfaces, including a network interface 1108, an SPI interface 1110, a PCIe interface 1112 and an SMbus interface 1114. In one embodiment, a cache 1116 is coupled between processor 1100 and SPI interface 1110.

In general, the operations of the various components comprising OOB IP networking µstack 158, serial over LAN block 154 and private protocols 156 may be facilitated via execution of instructions provided by LAN microcontroller firmware 166 (or other firmware stored on-board LAN microcontroller 112) on processor 1100. All or portions of this functionality may likewise be implemented via programmed hardware logic. Additionally, the operations of SPI interface 1110, PCIe interface 1112, and SMbus interface 1114 may be facilitated via hardware logic and/or execution of instructions provided by LAN microcontroller firmware 186 (or other firmware store on-board LAN microcontroller 112) on processor 1100. Furthermore, all or a portion of the firmware instructions may be loaded via a network store using the OOB communications channel.

The above description of illustrated embodiments of the invention, including what is described in the Abstract, is not intended to be exhaustive or to limit the invention to the precise forms disclosed. While specific embodiments of, and examples for, the invention are described herein for illustrative purposes, various equivalent modifications are possible within the scope of the invention, as those skilled in the relevant art will recognize.

These modifications can be made to the invention in light of the above detailed description. The terms used in the following claims should not be construed to limit the invention to the specific embodiments disclosed in the specification and the drawings. Rather, the scope of the invention is to be determined entirely by the following claims, which are to be construed in accordance with established doctrines of claim interpretation.

## Claims

1. A method for sending audio content to at least one media client (204), comprising:
reading audio content from media on which the audio content is stored via a media host (202);
employing an out-of-band (OOB) communication channel to transfer the audio content from the media host to the at least one media client; and
playing back the audio content at said at least one media client, wherein the OOB communication channel operates in a manner that is transparent to operating systems running on each of the media host and said at least one media client,
**characterised in that** the at least one media client is remote from the media host and connected thereto by a network (172) and the method includes:
setting up a virtual audio cable between the media host and a media client, the virtual audio cable comprising a reserved route including at least two network links spanning at least one routing element;
routing the audio content via the virtual audio cable using the OOB communication channel; and
employing one of multi-protocol label switching (MPLS)-based routing and generalized MPLS (GMPLS)-based routing to facilitate the virtual audio cable.

2. The method of claim 1, wherein the audio content comprises multiple channels of audio content.

3. The method of claim 1, further comprising:
encapsulating a form of the audio content in a plurality of network packets (235, 1004);
transferring the network packets from the media host to a media client (1006);
extracting, at the media client, the form of the audio content from the network packets (1008); and
playing back the audio content via an embedded audio sub-system in a manner that is transparent to the operating system running on the media client (1012).

4. The method of claim 3, further comprising:
processing the audio content that is read at the media host into High Definition (HD) Audio frames (1000);
encapsulating the HD Audio frames in the plurality of network packets and transferring the network packets to the media client;
extracting the HD Audio frames at the media client;
providing the HD Audio frames to an audio codec in an HD Audio function group for an HD Audio sub-system implemented by the media client; and
employing the audio codec to generate analog signals used to drive acoustic devices via which the audio content is played back.

5. The method of claim 1, further comprising,
implementing the OOB communications channel through use of a private network protocol over an Ethernet physical transport.

6. The method of claim 1, further comprising:
employing an embedded Internet Engineering Task Force (IETF) networking stack at each of the media host and said at least one media client; and
employing an IETF networking protocol to transfer the audio content via the OOB communications channel using the embedded IETF networking stacks at the media host and said at least one media client.

7. The method of claim 1, further comprising:
broadcasting the audio content to multiple media clients (204) using the OOB communications channel.

8. A system comprising a media host (202) and at least one media client (204), the media host having an input/output controller hub (ICH) comprising:
a media drive controller, to communicate with a Read only Memory (ROM)-based media drive;
an embedded audio sub-system to process audio data read from a media drive via the media drive controller; and
an embedded local area network (LAN) microcontroller (156), including,
a processor;
a network interface, coupled to the processor; and
memory, to store instruction to support processing operations corresponding to an out-of-band (OOB) networking stack (158) when executed on the processor; **characterised in that**, the at least one media client is remote from the media host and connected thereto by a network (172) and the system includes:
a virtual audio cable between the media host and a media client, the virtual audio cable comprising a reserved route including at least two network links spanning at least one routing element;
the virtual audio cable is operable to route audio content from the media host to the at least one media client via the virtual audio cable using the OOB communication channel employing one of multi-protocol label switching (MPLS)-based routing and generalized MPLS (GMPLS)-based routing to facilitate the virtual audio cable.

9. The system of claim 8, wherein the OOB networking stack includes a TCP (Transmission Control Protocol) layer, an IP (Internet Protocol) layer, and a MAC (Media Access Control) layer, and the OOB networking stack supports OOB processing of packets transferred using the TCP/IP transport protocol.

10. The system of claim 8, wherein the OOB networking stack further includes a Secure Sockets layer.

11. The system of claim 8, wherein packet processing operations corresponding to the layers in the OOB networking stack are facilitated via execution of firmware instructions on the processor.

12. The system of claim 8, wherein the embedded LAN microcontroller includes programmed hardware logic for facilitating OOB networking operations.

13. The system of claim 10, wherein the embedded audio sub-system is compliant with the High Definition Audio Specification.

## Patentansprüche

1. Verfahren zum Senden von Audioinhalt an wenigstens einen Medien-Client (204), das Folgendes umfasst:
Ablesen von Audioinhalt aus Medien, auf welchen der Audioinhalt gespeichert ist, über einen Medien-Host (202);
Anwenden eines außerbandigen (out-of-band, OOB) Kommunikationskanals zur Übertragung des Audioinhalts von dem Medien-Host an den wenigstens einen Medien-Client; und
Wiedergeben des Audioinhalts an dem wenigstens einen Medien-Client, wobei der OOB-Kommunikationskanal auf eine Weise arbeitet, die für Betriebssysteme transparent ist, die auf dem Medien-Host und dem wenigstens einen Medien-Client laufen, **dadurch gekennzeichnet, dass** der wenigstens eine Medien-Client von dem Medien-Host entfernt und über ein Netz (172) damit verbunden ist, und wobei das Verfahren Folgendes einschließt:
Einrichten eines virtuellen Audiokabels zwischen dem Medien-Host und einem Medien-Client, wobei das virtuelle Audiokabel eine reservierte Route umfasst, die wenigstens zwei Netzverbindungen einschließt, die wenigstens ein Routingelement überspannen;
Leiten des Audioinhalts über das virtuelle Audiokabel unter Verwendung des OOB-Kommunikationskanals; und
Anwenden entweder eines Multiprotokoll-Label-Switching(MPLS)-basierten Routings oder eines verallgemeinerten MPLS (GMPLS) basierten Routings zur Ermöglichung des virtuellen Audiokabels.

2. Verfahren nach Anspruch 1, wobei der Audioinhalt mehrere Kanäle von Audioinhalt umfasst.

3. Verfahren nach Anspruch 1, das ferner Folgendes umfasst:
Einkapseln einer Form des Audioinhalts in eine Mehrzahl von Netzpaketen (235, 1004);
Übertragen der Netzpakete von dem Medien-Host an einen Medien-Client (1006);
Extrahieren, an dem Medien-Client, der Form des Audioinhalts aus den Netzpaketen (1008); und
Wiedergeben des Audioinhalts über ein eingebettetes Audio-Subsystem auf eine Weise, die transparent für das Betriebssystem ist, das auf dem Medien-Client (1012) läuft.

4. Verfahren nach Anspruch 3, das ferner Folgendes umfasst:
Verarbeiten des Audioinhalts, der an dem Medien-Host abgelesen wird, zu hochauflösenden (High Definition, HD) Audiorahmen (1000);
Einkapseln der HD-Audiorahmen in die Mehrzahl von Netzpaketen und Übertragen der Netzpakete an den Medien-Client;
Extrahieren der HD-Audiorahmen an dem Medien-Client;
Bereitstellen der HD-Audiorahmen für einen Audio-Codec in einer HD-Audiofunktionsgruppe für ein HD-Audio-Subsystem, das von dem Medien-Client umgesetzt wird; und
Anwenden des Audio-Codecs zur Erzeugung von analogen Signalen, die dazu verwendet werden, akustische Vorrichtungen anzutreiben, über welche der Audioinhalt wiedergegeben wird.

5. Verfahren nach Anspruch 1, das ferner Folgendes umfasst:
Umsetzen des OOB-Kommunikationskanals durch die Verwendung eines privaten Netzprotokolls über einen physikalischen Ethernet-Transport.

6. Verfahren nach Anspruch 1, das ferner Folgendes umfasst:
Anwenden eines eingebetteten Netzwerkstapels einer Internet-Arbeitsgruppe (Internet Engineering Task Force, IETF) an sowohl dem Medien-Host als auch dem wenigstens einen Medien-Client; und
Anwenden eines IETF-Netzprotokolls zur Übertragung des Audioinhalts über den OOB-Kommunikationskanal unter Verwendung der eingebetteten IETF-Netzwerkstapel an dem Medien-Host und dem wenigstens einen Medien-Client.

7. Verfahren nach Anspruch 1, das ferner Folgendes umfasst:
Senden des Audioinhalts an mehrere Medien-Clients (204) unter Verwendung des OOB-Kommunikationskanals.

8. System, das einen Medien-Host (202) und wenigstens einen Medien-Client (204) umfasst, wobei der Medien-Host einen Eingangs-/Ausgangs-Steuerungshub (input/output controller hub, ICH) aufweist, der Folgendes umfasst:
eine Medienlaufwerkssteuerung zur Kommunikation mit einem Nur-Lese-Speicher (Read-Only-Memory, ROM) basierten Medienlaufwerk;
ein eingebettetes Audio-Subsystem zur Verarbeitung von Audiodaten, die aus einem Medienlaufwerk über die Medienlaufwerkssteuerung abgelesen werden; und
eine eingebettete Mikrosteuerung (156) mit lokalem Rechnernetz (Local Area Network, LAN), die Folgendes einschließt:
einen Prozessor;
eine Netzschnittstelle, die mit dem Prozessor verbunden ist; und
einen Speicher zur Speicherung von Befehlen zur Unterstützung von Verarbeitungsvorgängen, die einem außerbandigen (out-of-band, OOB) Netzwerkstapel (158) entsprechen, wenn sie auf dem Prozessor ausgeführt werden; **dadurch gekennzeichnet, dass** der wenigstens eine Medien-Client von dem Medien-Host entfernt und über ein Netz (172) damit verbunden ist, und wobei das System Folgendes einschließt:
ein virtuelles Audiokabel zwischen dem Medien-Host und einem Medien-Client, wobei das virtuelle Audiokabel eine reservierte Route umfasst, die wenigstens zwei Netzverbindungen einschließt, die wenigstens ein Routingelement überspannen;
wobei das virtuelle Audiokabel dazu betriebsbereit ist, Audioinhalt von dem Medien-Host an den wenigstens einen Medien-Client über das virtuelle Audiokabel unter Verwendung des OOB-Kommunikationskanals zu leiten, wobei entweder ein Multiprotokoll-Label-Switching(MPLS)-basiertes Routing oder ein verallgemeinertes MPLS(GMPLS)-basiertes Routing zur Ermöglichung des virtuellen Audiokabels angewendet wird.

9. System nach Anspruch 8, wobei der OOB-Netzwerkstapel eine TCP-Schicht (transmission control protocol, Übertragungssteuerungsprotokoll), eine IP-Schicht (Internet Protocol, Internetprotokoll) und eine MAC-Schicht (Media Access Control, Medienzugriffssteuerung) einschließt, und wobei der OOB-Netzwerkstapel eine OOB-Verarbeitung von Paketen unterstützt, die unter Verwendung des TCP-/IP-Transportprotokolls übertragen werden.

10. System nach Anspruch 8, wobei der OOB-Netzwerkstapel ferner eine Schicht zur Realisierung sicherer Sockets (Secure Sockets Layer) einschließt.

11. System nach Anspruch 8, wobei Paketverarbeitungsvorgänge, die den Schichten in dem OOB-Netzwerkstapel entsprechen, durch die Ausführung von Firmware-Befehlen an dem Prozessor ermöglicht werden.

12. System nach Anspruch 8, wobei die eingebettete LAN-Mikrosteuerung programmierte Hardware-Logik zur Ermöglichung von OOB-Netzwerkvorgängen einschließt.

13. System nach Anspruch 10, wobei das eingebettete Audio-Subsystem der High Definition Audio Specification (Spezifikation zu hochauflösendem Audio) entspricht.

## Revendications

1. Procédé d'envoi de contenu audio à au moins un client multimédia (204), consistant à :
lire un contenu audio provenant d'un support sur lequel le contenu audio est stocké par l'intermédiaire d'un hôte multimédia (202) ;
employer un canal de communication hors-bande (OOB) pour transférer le contenu audio de l'hôte multimédia à l'au moins un client multimédia ; et
reproduire le contenu audio au niveau dudit au moins un client multimédia, le canal de communication OOB fonctionnant de façon transparente vis-à-vis des systèmes d'exploitation en cours d'exécution sur l'hôte multimédia et ledit au moins un client multimédia,
**caractérisé en ce que** l'au moins un client multimédia est distant de l'hôte multimédia et connecté à l'hôte multimédia par un réseau (172), et **en ce que** le procédé consiste à :
configurer un câble audio virtuel entre l'hôte multimédia et un client multimédia, le câble audio virtuel comprenant une route réservée comprenant au moins deux liaisons réseau couvrant au moins un élément de routage ;
router le contenu audio par l'intermédiaire du câble audio virtuel au moyen du canal de communication OOB ; et
employer un routage basé sur une commutation multiprotocole par étiquette (MPLS) et un routage basé sur une MPLS généralisée (GMPLS) pour faciliter le câble audio virtuel.

2. Procédé selon la revendication 1, dans lequel le contenu audio comprend plusieurs canaux de contenu audio.

3. Procédé selon la revendication 1, consistant en outre à :
encapsuler une forme du contenu audio dans une pluralité de paquets de réseau (235, 1004) ;
transférer les paquets de réseau de l'hôte multimédia à un client multimédia (1006) ;
extraire, au niveau du client multimédia, la forme du contenu audio dans les paquets de réseau (1008) ; et
reproduire le contenu audio par l'intermédiaire d'un sous-système audio intégré de façon transparente vis-à-vis du système d'exploitation en cours d'exécution sur le client multimédia (1012).

4. Procédé selon la revendication 3, consistant en outre à :
traiter le contenu audio qui est lu au niveau de l'hôte multimédia en trames audio haute définition (HD) (1000) ;
encapsuler les trames audio HD dans la pluralité de paquets de réseau et transférer les paquets de réseau au client multimédia ;
extraire les trames audio HD au niveau du client multimédia ;
fournir les trames audio HD à un codec audio dans un groupe de fonctions audio HD pour un sous-système audio HD mis en oeuvre par le client multimédia ; et
employer le codec audio pour générer des signaux analogiques utilisés pour commander des dispositifs acoustiques par l'intermédiaire desquels le contenu audio est reproduit.

5. Procédé selon la revendication 1, consistant en outre à :
mettre en oeuvre le canal de communication OOB en utilisant un protocole de réseau privé sur un transport physique Ethernet.

6. Procédé selon la revendication 1, consistant en outre à :
employer une pile intégrée de mise en réseau du groupe Internet Engineering Task Force (IETF) au niveau de l'hôte multimédia et dudit au moins un client multimédia ; et
employer un protocole de mise en réseau IETF pour transférer le contenu audio par l'intermédiaire du canal de communication OOB au moyen des piles intégrées de mise en réseau IETF au niveau de l'hôte multimédia et dudit au moins un client multimédia.

7. Procédé selon la revendication 1, consistant en outre à :
diffuser le contenu audio sur plusieurs clients multimédias (204) au moyen du canal de communication OOB.

8. Système comprenant un hôte multimédia (202) et au moins un client multimédia (204), l'hôte multimédia ayant un concentrateur de contrôleurs d'entrée/sortie (ICH) comprenant :
un contrôleur de lecteur multimédia, pour communiquer avec un lecteur multimédia basé sur une mémoire morte (ROM) ;
un sous-système audio intégré, pour traiter des données audio lues à partir d'un lecteur multimédia par l'intermédiaire du contrôleur de lecteur multimédia ; et
un microcontrôleur de réseau local (LAN) intégré (156) comprenant :
un processeur ;
une interface réseau, couplée au processeur ; et
une mémoire, pour stocker des instructions qui, lorsqu'elles sont exécutées par ordinateur, prennent en charge les opérations de traitement correspondant à une pile de mise en réseau hors-bande (OOB) (158) ; **caractérisé en ce que** l'au moins un client multimédia est distant de l'hôte multimédia et connecté à l'hôte multimédia par un réseau (172), et **en ce que** le système comprend :
un câble audio virtuel entre l'hôte multimédia et un client multimédia, le câble audio virtuel comprenant une route réservée comprenant au moins deux liaisons réseau couvrant au moins un élément de routage ;
le câble audio virtuel servant à router un contenu audio de l'hôte multimédia à l'au moins un client multimédia par l'intermédiaire du câble audio virtuel au moyen du canal de communication OOB employant un routage basé sur une commutation multiprotocole par étiquette (MPLS) ou un routage basé sur une MPLS généralisée (GMPLS) pour faciliter le câble audio virtuel.

9. Système selon la revendication 8, dans lequel la pile de mise en réseau OOB comprend une couche de protocole de contrôle de transmission (TCP), une couche de protocole Internet (IP) et une couche de contrôle d'accès au support (MAC), et dans lequel la pile de mise en réseau OOB prend en charge le traitement OOB de paquets transférés au moyen du protocole de transport TCP/IP.

10. Système selon la revendication 8, dans lequel la pile de mise en réseau OOB comprend en outre une couche de socket sécurisée.

11. Système selon la revendication 8, dans lequel les opérations de traitement de paquet correspondant aux couches de la pile de mise en réseau OOB sont facilitées par l'intermédiaire de l'exécution d'instructions de micrologiciel sur le processeur.

12. Système selon la revendication 8, dans lequel le microcontrôleur LAN intégré comprend une logique matérielle programmée facilitant les opérations de mise en réseau OOB.

13. Système selon la revendication 10, dans lequel le sous-système audio intégré est conforme à la spécification audio haute définition.
